# EUROPEAN PATENT SPECIFICATION

(11) **EP 2 361 203 B1**
(45) Date of publication and mention of the grant of the patent: **21.08.2013**
(21) Application number: 09763993.4
(22) Date of filing: 13.11.2009
(51) Int. Cl.: B65D 81/38, F25D 3/08

(54) **THERMALLY INSULATED REUSABLE TRANSPORTATION CONTAINER**
WÄRMEISOLIERTER WIEDERVERWENDBARER TRANSPORTBEHÄLTER
CONTENEUR DE TRANSPORT REUTILISABLE THERMIQUEMENT ISOLE

(30) Priority: 14.11.2008 GB 0820876
(43) Date of publication of application: 31.08.2011
(73) Proprietor: Tower Cold Chain Solutions Limited, Theale Berkshire RG7 4PE (GB)
(72) Inventor: KRZAK, Christopher, Robert, Berkshire RG8 7AU (GB); VANN, James, Buckinghamshire HP6 6BX (GB)
(74) Representative: Morris, Jonathan Paul
(86) International application number: PCT/GB2009/002652
(87) International publication number: WO 2010/055295

(56) References cited:
- WO-A1-93/24797
- WO-A1-03/086269
- WO-A1-2005/036076
- US-A1- 2004 151 851

## Description

The present invention relates to a thermally insulated reusable transportation container for transporting temperature sensitive items, and a method for transporting temperature sensitive goods.

Thermally insulated containers are used to transport items that are sensitive to temperature and must therefore be maintained within predetermined temperature ranges, such as +2°C to +8°C and +15°C to +25°C, or close to a particular temperature such as -20°C. Such items include goods such as vaccines and drugs, biological samples, tissue cultures, chilled and frozen foods and many other products, some of which have extremely high financial value and are very sensitive to temperature changes. It is essential that such products are maintained within the appropriate temperature ranges during transportation.

Such goods are normally transported in cardboard or plastic containers packed with insulative materials, such as polystyrene, and gel bags containing phase change materials (hereafter referred to as PCMs) that have been cooled or heated to a predetermined temperature to provide additional heating or cooling as required. Heat energy flows into or out of the container, according to the difference between the ambient temperature and the internal temperature of the container. The temporal ambient temperature profile that will be experienced by the container cannot be predicted a priori, since containers may be moved from relatively cold countries to relatively hot countries and may be left standing for a significant period of time.

If the container is exposed to excessively high or low temperatures for extended periods, the internal temperature may go outside the required range, causing damage to the contents. The requirement to open a container on its journey increases the risk of payload theft. In current containers, then number and type of PCM packs employed is calculated according to the anticipated delivery time and the ambient temperature ranges likely to be experienced during transportation. However, as delivery can take longer than anticipated and the ambient temperatures may be much higher or lower than expected, the payload temperature may go outside the required range. During transportation, shocks, collisions or vibrations can cause the goods to move within the container, particularly those located at the side walls; these might then fall to a lower part of the container, increasing the risk of being heated/cooled to a temperature outside the predetermined safe range.

Anecdotal evidence suggests that large numbers of pharmaceutical/medicinal products are rendered unusable each year because they are not transported in the correct temperature range. For the pharmaceutical industry this presents significant waste, and hence cost, and there is an environmental impact as new goods will have to be produced and transported. For recipients of the goods there are significant health risks, because it may not be evident at the endpoint of the transport that the product has been rendered unsafe. For products such as vaccines this may result in loss of efficacy.

Another problem with many existing insulated containers is that they are not reusable. This is inconsistent with modem environmental protection policies and can lead to major storage and waste disposal problems. Some reusable containers do exist but they have only had limited success because the refrigeration systems used are not designed to last for long periods of time.

Certain vaccines degrade at a rate that depends on ambient temperature. As the loss of efficacy increases with temperature, it is desirable to maintain the temperature within the acceptable range (e.g. 2°C to 8°C).

Known containers are disclosed in WO 93/24797, WO 03/086269, US 2004/151851 and WO 2005/036076.

It is an object of the present invention to provide an insulated container that mitigates at least one of the aforementioned disadvantages, or at least provides an alternative configuration.

According to one aspect of the invention there is provided a reusable transportation container for transporting temperature sensitive goods according to claim 1. The container includes: a substantially rigid body having a thermally insulated storage volume; means for accessing the thermally insulated storage volume; a set of PCM units that can be inserted into and removed from the thermally insulated storage volume, wherein each of the PCM units includes a sealable substantially rigid container for storing phase change material therein, said set of PCM units being constructed and arranged to fit together to form a hollow structure that provides a substantially enclosed payload volume for receiving the temperature sensitive goods, wherein the set of PCM units is arranged to maintain the goods stored in the payload volume within a selected temperature range when in use; and wherein at least some of the PCM units include support formations that are arranged to interact with an adjacent PCM unit to prevent the hollow structure from collapsing inwards during use.

The invention prevents the goods from being damaged during transit and enables the payload temperature to be more predictable and better controlled as the arrangement of the PCM units is predetermined, and typically regular. Thus it is less likely that any part of the payload will move to a temperature outside of the selected range during transit. The arrangement of the PCM units in the form of a hollow structure maintains temperature equilibriation of the storage volume by air conduction.

The PCM units are arranged to be thermally conditioned prior to use such that the material within is uniformly in one physical state. During transit the PCM units absorb heat energy from, or supply heat energy to, their surroundings thereby causing the PCM within to change physical state over a period of time. The rigid arrangement of the PCM units also maintains temperature equilibriation of the storage volume by air conduction.

Typically a PCM is selected to change physical state at a temperature in one of the following ranges: +2°C to +8°C; -25°C to -15°C; +15 to +25°C. When it is required to maintain the temperature of the goods at around -20°C, preferably the PCM is a salt solution such as silver nitrate eutectic salt solution chosen to give a melting point of -20°C. Preferably the phase change material is selected to have at least one of the following thermal properties: a high latent heat energy of fusion per unit volume, a high specific heat energy capacity, low density, high thermal conductivity, small volume changes on phase transformation and low vapour pressure at operating temperatures.

Since the PCM units store the phase change material, in use, and the hollow container is substantially rigid, this ensures that the overall body of the PCM units is substantially rigid even when the PCM is in a liquid or solid state. The hollow container is preferably made from a polymer such as polyethylene.

Advantageously at least one of the support formations is formed integrally with one of the PCM units. Advantageously each PCM unit can include a plurality support formations. In preferred embodiments a plurality of the PCM units in the set include at least one of the support formations and preferably a plurality of the support formations. Preferably the or each support formation is in the form of a raised formation such as a ridge, rib, protrusion, lug, or some other similar formation that is upstanding from one of the surfaces of the PCM unit. Typically the set of PCM units is arranged such that the support formations are located within the hollow structure when fitted together.

When the PCM units are fitted together to form the hollow structure, the or each support formation interacts with at least one adjacent PCM unit to restrict relative movement between the PCM unit including the support formation and the adjacent PCM unit in at least one direction.

Advantageously at least one of the PCM units can include a complementary formation to the support formation that is arranged to engage with the support formation to restrict relative movement between the PCM unit including the support formation and the PCM unit including the complementary formation. The complementary formation can include a profiled surface of the PCM unit, or a recess formed in one of the surfaces of the PCM unit, that is arranged to engage with, or receive, the ridge, rib, protrusion, lug or the other similar formation. For example, the side faces of at least some of the PCM units can be profiled, such as chamfered at approximately 45°, such that they can engage with triangular sectioned support formations in adjacent PCM units. Advantageously a plurality of PCM units in the set can each include a plurality support formations and a plurality of PCM units in the set each include a plurality of complementary formations.

Advantageously at least one of the PCM units in the set can include support formations and complementary formations. Advantageously a plurality of the PCM units in the set includes support formations and complementary formations, and preferably all of the PCM units are so arranged.

The PCM units can be arranged such that the support formations and the complementary formations interlock. This prevents relative movement between interlocked PCM units.

Advantageously at least some of the PCM units in the set can include locating formations on one surface and complementary locating recesses on an opposite surface. This allows the PCM units to be securely attached to each other, for example in a horizontal or vertical stacking arrangement. For example, the locating formations can be in the form of raised T-shaped or cross-shaped formations and the recesses are arranged complementary thereto. Advantageously the locating formations can be located on the same surface as the support formations. In this instance the surface including the complementary locating recesses also includes recesses that are arranged to accommodate the support formations.

In preferred embodiments, the hollow structure includes a base, at least one side wall, and at least one upper member. For example, the base may include support formations that are arranged to restrict relative movement between the base and each of the side walls in at least one direction for each side wall. Preferably the hollow structure includes four side walls and the base includes four support formations arranged to engage with complementary formations included in each of the side walls.

The upper member may include support formations to restrict relative movement between the upper member and each of the side walls in at least one direction for each side wall. For hollow structures including four side walls the upper member preferably includes four support formations arranged to engage with complementary formations included in each of the side walls.

At least some of the side walls may include at least one support formation arranged to restrict relative movement in at least one direction between the side wall including the support formation and at least one other adjacent side wall. Advantageously each side wall can include at least one support formation arranged to restrict relative movement between the side wall and the base in at least one direction; and / or at least one support formation arranged to restrict relative movement between the side wall and the upper member in at least one direction.

Advantageously the hollow structure can be substantially cuboid and the set of heat energy reservoirs includes at least six PCM units to form the cuboid structure. Depending on the size of the container, the base, each side wall and the upper member may each comprise a plurality of PCM units, for example mounted side by side. Typically, the set of PCM units contains between 3 and 20 PCM units and more preferably between 6 and 16 PCM units, however any suitable number can be used. A set of three PCM units can be in the form of a cylindrical structure, for example one curved side wall, a base and a lid. In most applications the hollow structure will be a cube, or is cuboid, and therefore includes at least six PCM units. It will be appreciated by the skilled person that other shapes can be used for the hollow structure and the number and shape of the PCM units is determined accordingly.

Further, depending on the heating / cooling capacity required, any of the base, each side wall, and the upper member may include a plurality of layers of PCM units, for example two or more PCM units stacked either vertically or horizontally.

The container is arranged to include at least one PCM unit that will freeze during use, thus liberating heat energy, and at least one PCM unit that melts during use, thus absorbing heat energy. The set of PCM units includes a first PCM unit having a first PCM arranged to change phase at a first temperature and a second PCM unit having a second PCM arranged to change phase at a second temperature, wherein the first and second temperatures are different.

For example, when it is required to maintain the temperature of the goods in the range +2°C to +8°C, the first PCM is selected to change phase at a temperature in the range - 20°C to +5°C and the second PCM is selected to change phase at a temperature in the range +5°C to +20°C. Preferably at least one of the PCM units is water-based with a melting point around 0°C, and may include additives such as acticides and nucleating agents; and at least one of the PCMs can comprise a paraffin wax which has a melting point of around +5°C. Thus the second PCM changes phase at a higher temperature than the first PCM, and the arrangement is such that the second PCM unit is positioned closer to the payload than the first PCM unit. The advantage of this is that the first PCM unit acts as a heat sink for the second PCM unit.

In most practical applications the set of PCM units can include a plurality of first PCM units and a plurality of second PCM units and the structure is arranged such that payload volume is substantially defined by the plurality of second PCM units, and the plurality of first PCM units are mounted on, or to, the second PCM units such that they are located outside of the payload volume. This provides a very efficient arrangement and helps to ensure that the goods are not heated or cooled to a temperature outside of the required range. Any practicable number of units can be stacked or layered together.

Advantageously the set of PCM units are releasably engaged with each other such that the hollow structure can be disassembled to enable the PCM units to be more easily thermally conditioned.

Advantageously the set of PCM units can be constructed and arranged such that there is a tight fit between the hollow structure and the thermal insulation. This enables the thermal insulation to provide support for the hollow structure to ensure that the PCM units do not collapse outwards during transit.

Advantageously at least one of the PCM units can include stiffening formations to stiffen its structure. Preferably the stiffening formations include through holes or a kiss-off arrangement.

Advantageously at least one of PCM units can include a lifting formation. The lifting formation can include a through hole that is sufficiently large for a user of the device to grip the heat reservoir by hand.

The container includes an external temperature sensor device for measuring the ambient temperature and an internal temperature sensor device for measuring the payload temperature. The container includes an automated data logger for recording the payload temperature and / or the ambient temperature, for example as part of its permanent structure. Advantageously the container can include as part of its permanent structure other bespoke hardware and software which, using information recorded by the data logger, can calculate and display information pertinent to the remaining lifetime of the products which make up the payload.

Advantageously the means for accessing the thermally insulated storage volume includes a sealable lid. Advantageously, the container can include a main body and the lid can be hinged to the main body.

Preferably the outer shell is made from either a polymer or reinforced glass fibre. The container can be substantially transparent to x-rays in at least one direction.

Advantageously the container can include a switch device or sensor that is arranged to detect the opening and/or closing of the container. The switch device or sensor is preferably connected to the data logger, which is arranged to record the opening and/or closing events. This enables unauthorised access of the container to be detected.

According to another aspect of the invention there is provided a method for transporting temperature sensitive goods according to claim 13. The method includes: providing a reusable container having a substantially rigid body, a thermally insulated storage volume, and means for accessing the thermally insulated storage volume; providing a set of PCM units, wherein each of the PCM units includes a sealable substantially rigid container for storing phase change material therein and at least some of the PCM units include support formations; placing the set of PCM units into the thermally insulated storage volume, forming a hollow structure from the set of PCM units that provides a substantially enclosed payload volume for receiving the temperature sensitive goods, including arranging the PCM units such that the support formations engage with an adjacent PCM unit, the engaging interaction between the support formation and the adjacent PCM unit thereby preventing the hollow structure from collapsing inwards during transportation.

Advantageously the method can include forming the hollow structure to include a base, at least one side wall, and at least one upper member.

Advantageously the method can include the support formations on the base restricting relative movement between the base and the or each side wall.

Advantageously the method can include the support formations on the upper member restricting relative movement between the upper member and the or each side wall.

Advantageously the method can include providing at least one side wall having at least one support formation, the support formation interacting with an adjacent side wall thereby restricting relative movement between the side wall including the support formation and the adjacent side wall.

Advantageously the method can include dismantling the structure after use.

Embodiments of the invention will now be described by way of example only with reference to the accompanying drawings, in which:
Fig. 1 is an isometric view of an insulated container according to a first embodiment of the invention;
Fig. 2 is an isometric view of a PCM panel (hereinafter referred to as a PCMP);
Fig. 3 is an end view of the PCMP of Figure 2;
Fig. 4 is a plan view of the PCMP of Figure 2;
Fig. 5 is a side view of the PCMP of Figure 2;
Fig. 6 is an isometric view of an insulated container according to a second embodiment of the invention; and
Figures 7 to 10 are views of alternatively configured PCMPs for use in the insulated container of Figure 1.

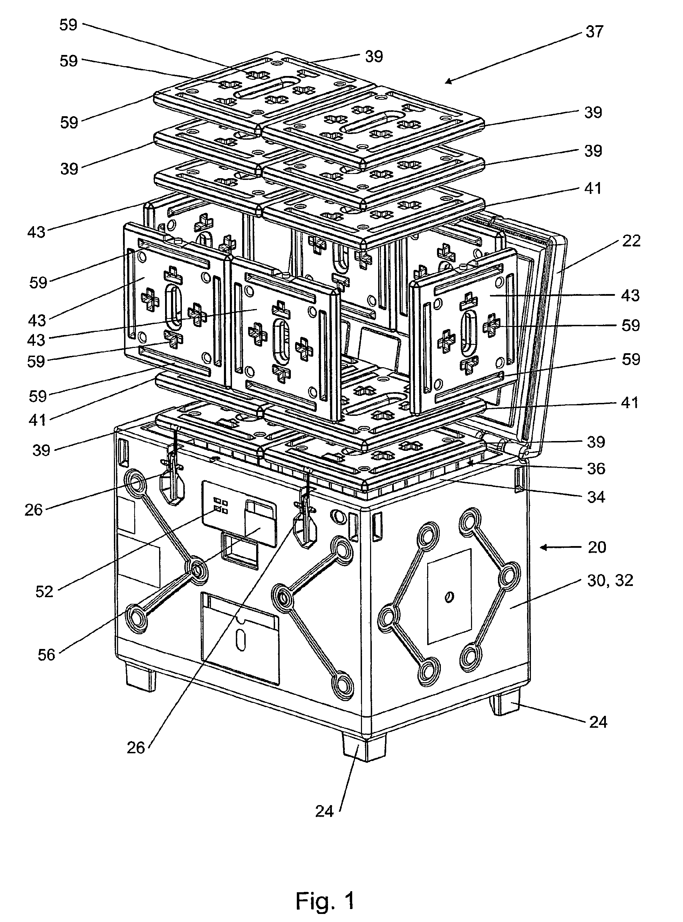

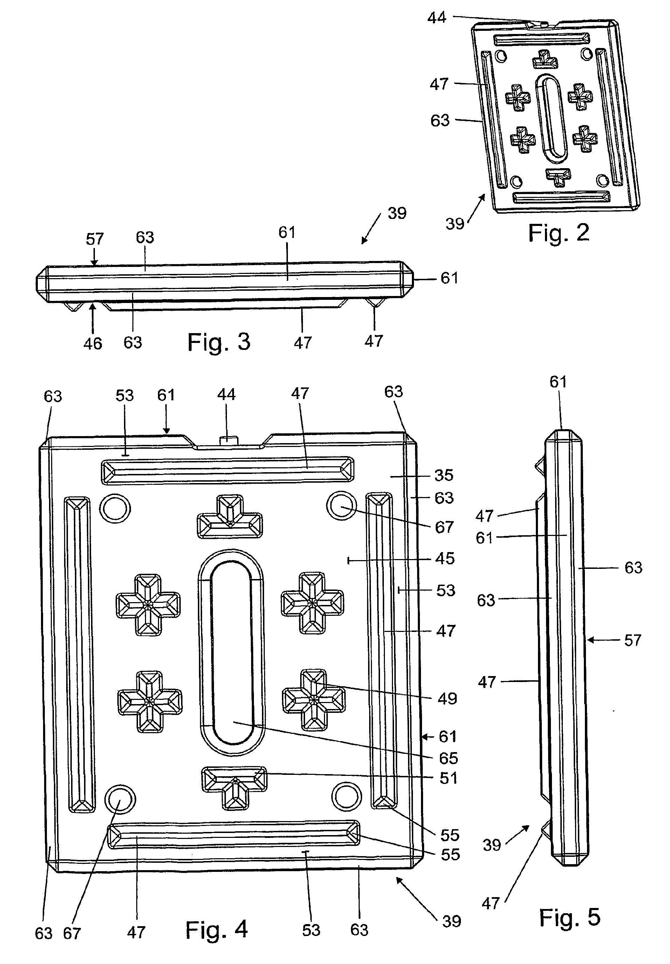

An insulated container according to a first embodiment of the invention is shown in Figs. 1 to 5. The insulated container 20 is in the form of a box having a pivotable lid 22 and a set of feet 24. Two clips 26 are provided for securing the lid 22 in place.

The insulated container 20 is designed specifically for use in transporting goods that must be maintained at a temperature of between +2°C and +8°C, such as, for example, vaccines and transplant organs. Insulated containers for different temperatures will be generally similar in construction, but may be modified as described in more detail below to maintain the required temperatures. For example, for some applications the internal temperature must be maintained in the range +15°C to + 25°C whereas for other applications, the internal temperature must be maintained in the range -25°C to -15°C.

The insulated container 20 consists of a casing 30 that includes an outer shell 32 of, for example, glass reinforced plastic (GRP), metal or a plastics material. The casing has an inner liner 34 of insulating materials with a very low thermal conductivity value, for example a foamed plastics material. The lid 22 includes a silicon seal which has a sealing fit with the body of the box. The lid 22 has a similar construction to the body of the container.

Inside the inner liner 34 there is provided a storage volume 36 that is arranged to receive a set 37 of PCMPs. The set 37 comprises sixteen PCMPs that are arranged to fit together to provide a substantially enclosed payload volume with the requisite cooling capability. Each PCMP comprises a hollow container 35 made from a polymer such as polyethylene and is filled with a PCM. The PCM used is dependent on the temperature characteristics that the payload requires. The container 20 shown in Figure 1 has a capacity of around 400L and is provided with three different types of PCMPs in order to maintain the goods being transported at a temperature of between +2°C and +8°C: six large PCMPs 39 containing a PCM that changes phase at around 0°C; four large PCMPs 41 containing a PCM that changes phase at around +5°C; and six small PCMPs 43 containing a PCM that changes phase at around +5°C. The PCM that changes phase at around 0°C comprises filtered water and two acticides: DB20, which is fast acting, and MBS, which is slower acting. The PCM that changes phase at around +5°C comprises a paraffin wax (mostly n-tetradecane). In the Figures the large PCMPs 39,41 have a capacity of around 14 litres and the small PCMPs 43 have a capacity of around 12 litres. It will be apparent to the skilled person that containers having different capacities can be used. Each PCMP is filled via an opening in the container, which is then sealed with a foil seal and covered with a protective polythene cap 44. Alternatively, the cap 44 can be spun welded to the container body, or can comprise a screw cap or bung.

The current capacities have been selected on the basis of current health and safety lifting requirements and with consideration for the size of refrigeration units available to condition the PCMPs prior to use. If lifting equipment is available, together with large refrigeration units, then larger PCMPs can be used, which will reduce the number of PCMPs required to provide a substantially enclosed payload.

Each large container 35 includes a hollow body that is substantially cuboid having a length of 600mm, width of 500mm and a depth of 50mm, and thus the container is substantially planar in that it has a large surface area when viewed in plan and a relatively small depth. On one of the planar surfaces, hereinafter referred to as the upper planar surface 45, there is provided a series of raised support formations that includes four ridges 47, at least two cross-shaped locating formations 49 and two T-shaped locating formations 51. Each ridge 47 is arranged parallel to one of the edges of the upper planar surface and extends along a substantial part of the length/width of the planar surface. Each ridge 47 is spaced from the edge of the upper planar surface such that a border 53 extends around the ridges 47 on the upper planar surface. Each ridge 47 has a triangular cross-section having longitudinal faces that are inclined to the planar upper surface at around 45 degrees. The end faces 55 are also inclined to the upper planar surface.

The container includes side faces 61 that are chamfered 63 at 45 degrees. The chamfered surfaces 63 are arranged such that that chamfered surfaces of a first PCMP can lie against the inclined longitudinal faces of the ridges of a second PCMP in a manner that fixes them in a perpendicular arrangement.

The other planar face, hereinafter referred to as the lower planar face 57, includes a series of recesses 59 that are arranged complementary to the raised formations (ridges, cross-shapes and T-shapes) and are arranged to receive the raised formations on the upper planar face 45 from a like container 35 when the like container is stacked on top. Thus the raised formations and recesses 59 provide locating formations to prevent lateral movement between the PCMPs when they are stacked on top of each other.

Each container further includes a through hole 65 that is arranged to receive a user's hand for the sake of ease of lifting and four smaller through holes 67 that are arranged to stiffen the container body.

Each small container is similar to the large container, except that the upper and lower surfaces are substantially square in plan (500mm by 500mm), and they only include two cross-shaped formations 49 on its upper planar surface and two complementary cross-shaped recesses on its lower planar surface 57.

An advantage of the invention is that for each of the temperature ranges +2°C to +8°C; -25°C to - 15°C; +15°C to +25°C it is only necessary to have one set of PCM panels (one different set for each temperature range) for any destination, that is regardless as to whether the container is being sent to a relatively hot country or a relatively cold country. This is because of the thermal stability achieved by the invention.

In use, prior to loading the insulated container 20, each of the PCMPs 39,41,43 is conditioned by cooling (or heating) to predetermined temperatures. The PCMPs containing a PCM that changes phase at 0°C are cooled to a temperature of around -20°C and the PCMPs containing a PCM that changes phase at +5°C are cooled to a temperature of around +6 °C. The PCMPs 39,41,43 are then loaded into the insulated container to provide a substantially cuboid payload volume. Two of the large 0°C PCMPs 39 are placed towards the base of the insulated container, side by side in a horizontal fashion, with their raised formations facing upwards. One of the large +5°C PCMPs 41 is stacked on top of each of the 0°C PCMPs 39 horizontally such that the raised formations of the large 0°C PCMPs 39 fit into the complementary recesses 59 in the large +5°C PCMPs 41. The six small +5°C PCMPs 43 are then mounted on top of the large +5°C PCMPs vertically such that they form the sides of the cuboid payload volume, with their lower chamfered surfaces 63 resting against the support ridges of the large +5°C PCMPs, their end faces located on the boarder area 53, and their own ridges 47 facing inwards. This ensures the correct location of the small PCMPs 43 and that they are arranged substantially perpendicularly to the large +5°C PCMPs 41. The interaction between the chamfered surfaces 63 of the small PCMPs 43 and the ridges 47 of the large +5°C PCMPs 41, and the chamfered surfaces 63 of the small PCMPs 43 and the ridges 47 of adjacent small side PCMPs 43, maintains their relative positions.

At this stage the goods are loaded into the payload volume and can be surrounded by a packing material such as bubble wrap to ensure that the goods do not move during transit. If used, it is preferable that the packing material has also been conditioned to reduce its temperature prior to use.

Two of the large +5°C PCMPs 41 are then mounted on top of the six small +5°C PCMPs 43 in a side by side horizontal fashion to enclose the payload volume, with their raised formations 47,49,51 facing downwards. Thus the ridges 47 on the upper large +5°C PCMPs 41 engage with the upper chamfered surfaces 63 of the small +5°C PCMPs 43, thereby maintaining their relative positions. Two of the large 0°C PCMPs 39 are then placed on top of each of the large +5°C PCMPs 41. The large 0°C PCMPs 39 are stacked on top of the large +5°C PCMPs 41 such that their raised formations 47,49,51 engage with the complementary recesses 59.

Since the large 0°C PCMPs 39 are cooler than the +5°C PCMPs 41,43, heat energy flows from the +5°C PCMPs 41,43 to the 0°C PCMPs 39, and thus the 0°C PCMPs 39 act as heat sinks for absorbing heat energy from the payload volume to reduce its temperature. The inventors have found in testing that the insulated container 20 arranged with the PCMPs 39,41,43 as described above can maintain goods within the +2°C and +8°C range for up to 260 hours (11 days). This has been found to hold true even in relatively hot ambient conditions. This allows the insulated container 20 to be transported very long distances without damage to the goods stored therein, which addresses this key problematic requirement for the pharmaceutical industry.

The insulated container includes an external temperature sensor 52 mounted on the outside of the casing 30, and an internal temperature sensor mounted inside the payload volume. These are connected to a single or multi-channel data logger 56 that is provided to maintain a record of the payload temperature during the entire transit time. The temperature log may be kept in visual or electronic form, and in the latter case facilities may be provided for downloading the information to a computer. The data logger 56 can also be arranged to record events such as the insulated container being opened or tampered with.

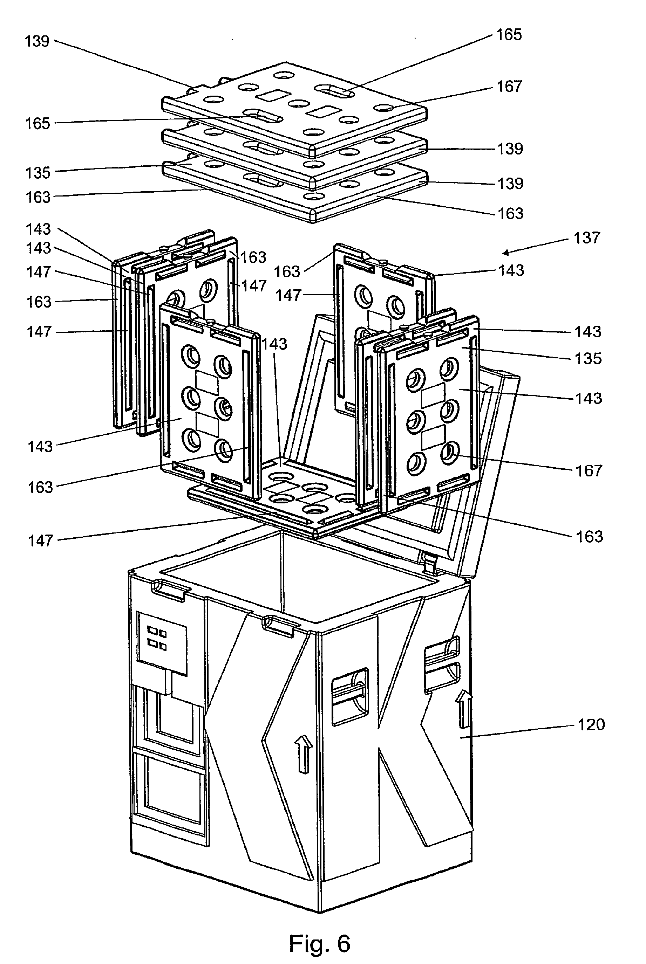

A second embodiment of the invention is shown in Figure 6. The second embodiment is similar to the first embodiment, except that the volume of the insulated container 120 is smaller (approximately 70L), and thus a smaller set 137 PCMPs is required. Also the container 135 shapes are different though function in a similar manner. The set 137 of PCMPs includes three large PCMPs 139 containing silver nitrate eutectic salt solution with a melting point of around -20°C and seven small PCMPs 143 containing the same PCM.

When thermally conditioning the PCMPs 139,143, they are cooled to a temperature of around -23°C before being inserted into the container. One of the small PCMPs 143 is located in the base of the insulated container. The other six small PCMPs 143 are arranged vertically as shown in Figure 6. The ridges 147 on each of the small PCMPs 143 interact with chamfered surfaces 163 to restrict relative movement between the PCMPs 143. After the goods are loaded into the payload volume, the large PCMPs 139 are then placed on top of the side walls 143 to enclose the goods.

The inventors have found in testing that the insulated container 120 arranged with the PCMPs 139,143 as described above can maintain goods at approximately -21 °C for up to 260 hours (11 days) depending on the ambient temperature.

The larger PCMPs 143 include lifting handles 165, whereas the smaller PCMPs 139 do not. Both the large and small PCMPs 143,139 include through-holes 167 to increase the rigidity of the containers 135.

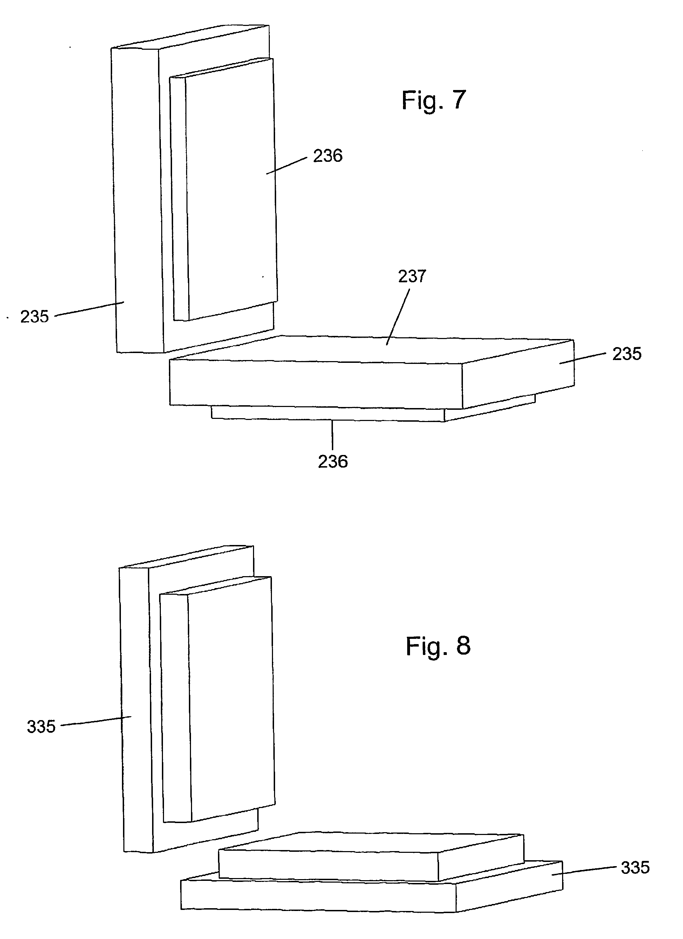

Figures 7 to 10 show third, fourth, fifth and sixth alternative configurations for the PCMPs 235, 335, 435, 535. The third PCMP 235 comprises a substantially cuboid hollow container, wherein one of the larger rectangular surfaces when viewed in plan is stepped such that a smaller substantially cuboid member protrudes therefrom (see Figure 7). A structure can be erected by using a first PCMP 235 as a base and assembling at least four PCMPs 235 as side walls such that their protruding parts are located on an upper surface 237 of the base. A further PCMP 235 can be placed on top of the side walls to form a lid. The stepped parts 236 prevent the structure from collapsing inwards during use.

The fourth PCMP 335 is stepped similar to the third PCMP but has different proportions. It is also envisaged that the orientation of the PCMP 335 used as the base will be inverted when compared with the base used for the third PCMP 235 when forming a structure from a set of the PCMPs 335.

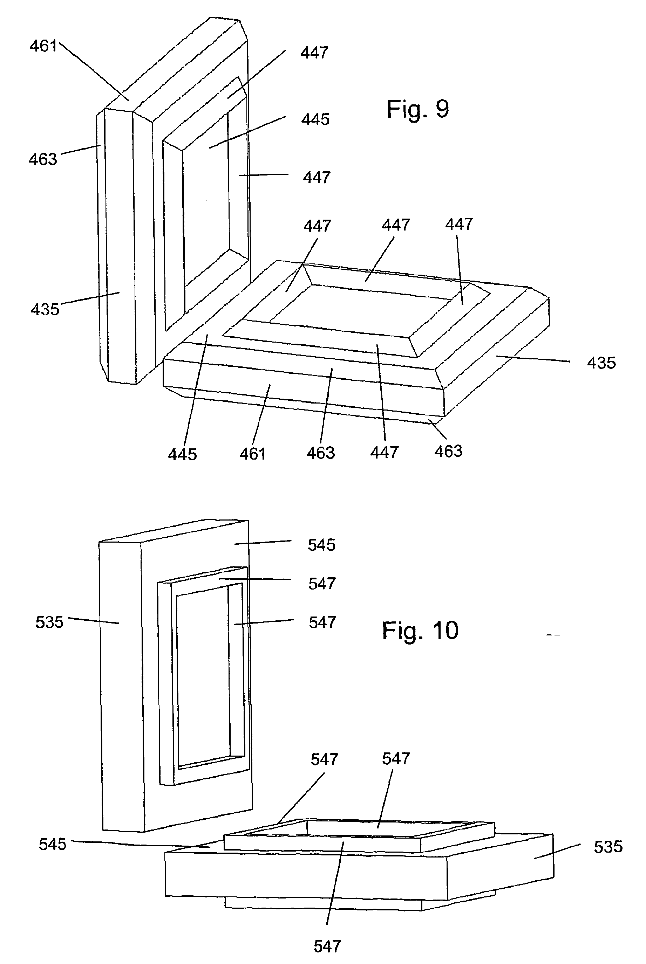

The fifth PCMP 435 is similar to the first PCMP 35 in that it includes a substantially cuboid hollow container, which includes chamfered surfaces 463 between side walls 461 and larger substantially rectangular surfaces 445. Four ridges 447 having a substantially triangular cross-section protrude from one of the rectangular surfaces 445. The ridges 447 are joined end to end in a substantially rectangular arrangement when viewed in plan (see Figure 9). A set of the fifth PCMPs fits together in a similar manner to the first set of PCMPs 35.

The sixth PCMP 535 includes a substantially cuboid hollow container, having four ribs 547 protrude from one of the larger rectangular surfaces 545. The ribs 547 have a substantially square cross-section and are arranged end to end in a substantially rectangular arrangement when viewed in plan (see Figure 10). A set of the sixth PCMP 535 fits together in a similar manner to a set of the third PCMP 235.

Various modifications of the invention are possible that fall within the scope of the current invention, some examples of which are discussed below.

Different types of PCM may be used to meet required temperature ranges. The invention is not to be considered as limited to just the ranges mentioned in the examples.

Also, different numbers, sizes, geometrical shapes and arrangements of PCMPs can be used to make up the substantially enclosed payload volume. If two or more different PCMs are used, different arrangements of the PCMPs can be made to obtain the desired thermal requirements for the necessary period of time.

Different shape PCMPs can be used to create alternative hollow structures, for example a cylindrical hollow structure can be created by having one or more PCMPs to make up the curved wall, with short cylindrical PCMPs to provide end caps. The PCMPs can be substantially square in plan to provide a substantially cube-like structure. In the embodiments described above, the formations that restrict relative movement between the PCMPs can be arranged to interlock the units more firmly, for example by using a tongue and groove arrangement, to provide an entirely self supporting structure.

Different arrangements of protruding members and stepped surfaces can be used to prevent a set of PCMPs from collapsing inwards in use. The arrangements shown in Figures 7 to 10 are arranged continuously. As an alternative, it is possible to have an arrangement of discrete protruding members formed integrally with the containers to interact with adjacent PCMPs to prevent the structure from collapsing inwards.

In addition, or as an alternative, to the formations formed integrally with the containers, separate support elements can be provided for supporting the relative positions of the PCMPs.

The insulated container may be bar-coded or can include at least one RFID tag to carry information such as the payload carried, transit dates and any other information that may be required. The insulated container may also be provided with visual and/or audible warning devices, for example to warn that the required temperature range has not been maintained.

## Claims

1. A reusable transportation container (20) for transporting temperature sensitive goods, said container (20) including:
a substantially rigid body (30) having a thermally insulated (34) storage volume (36);
means for accessing (22) the thermally insulated (34) storage volume (36);
a set of PCM units (37) that can be inserted into and removed from the thermally insulated storage volume, wherein each of the PCM units (39;41;43) includes a sealable substantially rigid container for storing phase change material therein, said set of PCM (37) units being constructed and arranged to fit together to form a hollow structure that provides a substantially enclosed payload volume for receiving the temperature sensitive goods, wherein the set of PCM units (37) is arranged to maintain the goods stored in the payload volume within a selected temperature range when in use; and wherein at least some of the PCM units (39;41;43) include support formations (47) that are arranged to interact with an adjacent PCM unit (39;41;43) to prevent the hollow structure from collapsing inwards during use, **characterised in that** the set of PCM units (37) includes a first PCM unit (39) having a first PCM arranged to change phase at a first temperature and a second PCM unit (41;43) having a second PCM arranged to change phase at a second temperature, wherein the first and second temperatures are different, and by an external temperature sensor (52) for measuring the ambient temperature outside of the container; an internal temperature sensor for measuring the temperature in the payload volume; and a recording device (56) for recording the temperature in the payload volume and / or the ambient temperature.

2. A container according to claim 1, wherein at least one of the support formations (47) is formed integrally with one of the PCM units (39;41;43); and preferably the support formations include at least one of a protrusion, ridge, rib, stepped surface, a recess; and/or at least one of the PCM units (39;41;43) in the set includes a complementary formation (59) to the support formation (47) that is arranged to engage with the support formation (47); and preferably at least one of the PCM units (39;41;43) in the set (37) includes support formations (47) and complementary formations (59).

3. A container according to claim 1 or 2, wherein at least some of the PCM units (39;41;43) in the set (37) include locating formations (49) on one surface (45) and complementary locating recesses (59) on an opposite surface (57); and / or the PCM units (39;41;43) are arranged to interlock.

4. A container according to any one of the preceding claims, wherein the hollow structure includes a base, at least one side wall, and at least one upper member; and preferably, the base includes support formations (47) that are arranged to restrict relative movement between the base and each of the side walls; the upper member includes support formations (47) to restrict relative movement between the upper member and each of the side walls; and / or at least one of the side walls includes at least one support formation (47) arranged to restrict relative movement between the side wall including the support formation (47) and at least one other adjacent side wall.

5. A container according to any one of the preceding claims, wherein the PCM units (39;41;43) are arranged in layers.

6. A container according to any one of the preceding claims, wherein the first PCM changes phase at a temperature in the range -20°C to +5°C, and preferably at a temperature of around 0°C, and the second PCM changes phase at a temperature in the range +5°C to +20°C and preferably at a temperature of around +5°C.

7. A container according to claim 6, wherein the first PCM mostly comprises of water and the second PCM mostly comprises of a wax;

8. A container according to any one of the preceding claims, wherein the second PCM changes phase at a higher temperature than the first PCM, and the second PCM unit (41 ;43) is positioned closer to the payload than the first PCM unit (39).

9. A container according to any one of the preceding claims, wherein the set of PCM units (39) includes a plurality of first PCM units (39) and a plurality of second PCM units (41;43) and the structure is arranged such that payload volume is substantially defined by the plurality of second PCM units (41;43), and the plurality of first PCM units (39) are mounted on, or to, the second PCM units (41;43) such that they are located outside of the payload volume.

10. A container according to any one of the preceding claims, wherein the phase change material changes from a solid state to a liquid state at a temperature in one of the following ranges: +2°C to +8°C; -25°C to -15°C; +15°C to +25°C.

11. A container according to any one of the preceding claims, at least one of PCM units (39,41,43) includes a lifting formation comprising a through hole (65).

12. A container according to any one of the preceding claims, including means for preventing the hollow structure from collapsing outwards, wherein the set of PCM units is constructed and arranged such that there is a tight fit between the hollow structure and the thermal insulation (34).

13. A method for transporting temperature sensitive goods, including:
providing a reusable container (20) having a substantially rigid body (30), a thermally insulated (34) storage volume (36), and means for accessing (22) the thermally insulated (34) storage volume (36);
providing a set of PCM units 37, wherein each of the PCM units (39;41;43) includes a sealable substantially rigid container for storing phase change material therein and at least some of the PCM units (37) include support formations;
placing the set of PCM units (37) into the thermally insulated storage volume (36), forming a hollow structure from the set of PCM units (37) that provides a substantially enclosed payload volume for receiving the temperature sensitive goods, including arranging the PCM units (39;41;43) such that the support formations (47) engage with an adjacent PCM unit, the engaging interaction between the support formation and the adjacent PCM unit (39;41;43) thereby preventing the hollow structure from collapsing inwards during transportation, **characterised in that** the set of PCM units (37) includes a first PCM unit (39) having a first PCM arranged to change phase at a first temperature and a second PCM unit (41;43) having a second PCM arranged to change phase at a second temperature, wherein the first and second temperatures are different, and by using an external temperature sensor (52) to measure the ambient temperature outside of the container; an internal temperature sensor to measure the temperature in the payload volume; and using a recording device (56) to record the temperature in the payload volume and / or the ambient temperature.

14. A method according to claim 13, including forming the hollow structure to include a base, at least one side wall, and at least one upper member, and preferably including the support formations (47) on the base to restrict relative movement between the base and the or each side wall; the support formations (47) on the upper member restricting relative movement between the upper member and the or each side wall; and / or providing at least one side wall having at least one support formation (47), the support formation (47) interacting with an adjacent side wall thereby restricting relative movement between the side wall including the support formation (47) and the adjacent side wall.

15. A method according to claim 13 or 14, including the first PCM changing phase at a temperature in the range -20 ° C to +5 ° C, and preferably at a temperature of around 0°C, and the second PCM changing phase at a temperature in the range +5°C to +20°C and preferably at a temperature of around +5°C.

## Patentansprüche

1. Wiederverwendbarer Transportbehälter (20) für den Transport temperaturempfindlicher Güter, wobei der Behälter (20) Folgendes aufweist:
einen im Wesentlichen starren Körper (30) mit einem wärmeisolierten (34) Aufnahmevolumen (36),
Mittel für den Zugang (22) zu dem wärmeisolierten (34) Aufnahmevolumen (36),
einen Satz Latentwärmespeicher-Einheiten (37), die in das wärmeisolierte Aufnahmevolumen eingesetzt und aus ihm entfernt werden können, wobei jede der Latentwärmespeicher-Einheiten (39; 41; 43) einen dicht verschließbaren, im Wesentlichen starren Behälter zum Lagern von Latentwärmespeichern in ihm aufweist, wobei der genannte Satz Latentwärmespeicher-Einheiten (37) aufgebaut und angeordnet ist, dass sie zu einer hohlen Konstruktion zusammengefügt sind, die ein im Wesentlichen eingeschlossenes Nutzvolumen zur Aufnahme der temperaturempfindlichen Güter bereitstellt, wobei der Satz Latentwärmespeicher-Einheiten (37) angeordnet ist, um im Gebrauch die in dem Nutzvolumen gelagerten Güter in einem ausgewählten Temperaturbereich zu halten, und wobei wenigstens einige der Latentwärmespeicher-Einheiten (39; 41; 43) Stützgebilde (47) aufweisen, die zur Wechselwirkung mit einer angrenzenden Latentwärmespeicher-Einheit (39; 41; 43) angeordnet ist, um zu verhindern, dass die hohle Konstruktion während des Gebrauchs nach innen zusammenfällt, **dadurch gekennzeichnet, dass** der Satz Latentwärmespeicher-Einheiten (37) eine erste Latentwärmespeicher-Einheit (39) mit einem ersten Latentwärmespeicher, der zum Phasenwechsel bei einer ersten Temperatur angeordnet ist, und eine zweite Latentwärmespeicher-Einheit (41; 43) mit einem zweiten Latentwärmespeicher, der zum Phasenwechsel bei einer zweiten Temperatur angeordnet ist, aufweist, wobei die erste und die zweite Temperatur verschieden sind, und durch einen Außentemperatursensor (52) zum Messen der Umgebungstemperatur außerhalb des Behälters, einen Innentemperatursensor zum Messen der Temperatur im Nutzvolumen und eine Aufzeichnungsvorrichtung (56) zum Aufzeichnen der Temperatur im Nutzvolumen und/oder der Umgebungstemperatur.

2. Behälter nach Anspruch 1, wobei wenigstens eines der Stützgebilde (47) mit einer der Latentwärmespeicher-Einheiten (39; 41; 43) einstückig ausgebildet ist und die Stützgebilde vorzugsweise wenigstens eines der Folgenden aufweisen: einen Vorsprung, einen Grat, eine Rippe, eine abgestufte Fläche, eine Aussparung, und/oder wenigstens eine der Latentwärmespeicher-Einheiten (39; 41; 43) in dem Satz ein Gegengebilde (59) zu dem Stützgebilde (47) aufweist, das für den Eingriff mit dem Stützgebilde (47) angeordnet ist, und vorzugsweise wenigstens eine der Latentwärmespeicher-Einheiten (39; 41; 43) in dem Satz (37) Stützgebilde (47) und Gegengebilde (59) aufweist.

3. Behälter nach Anspruch 1 oder 2, wobei wenigstens einige der Latentwärmespeicher-Einheiten (39; 41; 43) in dem Satz (37) an einer Oberfläche (45) Positionierungsgebilde (49) und an einer gegenüberliegenden Oberfläche (57) Positionierungsgegengebilde (59) aufweisen und/oder die Latentwärmespeicher-Einheiten (39; 41; 43) zur ineinandergreifenden Verbindung miteinander angeordnet sind.

4. Behälter nach einem der vorhergehenden Ansprüche, wobei die hohle Konstruktion eine Basis, wenigstens eine Seitenwand und wenigstens ein oberes Element aufweist und die Basis vorzugsweise Stützgebilde (47) aufweist, die zum Einschränken relativer Bewegungen zwischen der Basis und jeder der Seitenwände angeordnet sind, wobei das obere Element Stützgebilde (47) zum Einschränken relativer Bewegungen zwischen dem oberen Element und jeder der Seitenwände aufweist und/oder wenigstens eine der Seitenwände wenigstens ein Stützgebilde (47) aufweist, das zum Einschränken relativer Bewegungen zwischen der das Stützgebilde (47) aufweisenden Seitenwand und wenigstens einer weiteren angrenzenden Seitenwand angeordnet ist.

5. Behälter nach einem der vorhergehenden Ansprüche, wobei die Latentwärmespeicher-Einheiten (39; 41; 43) in Lagen angeordnet sind.

6. Behälter nach einem der vorhergehenden Ansprüche, wobei der erste Latentwärmespeicher die Phase bei einer Temperatur im Bereich von -20°C bis +5°C und vorzugsweise bei einer Temperatur um 0°C wechselt und der zweite Latentwärmespeicher die Phase bei einer Temperatur im Bereich +5°C bis +20°C und vorzugsweise bei einer Temperatur um +5°C wechselt.

7. Behälter nach Anspruch 6, wobei der erste Latentwärmespeicher hauptsächlich aus Wasser besteht und der zweite Latentwärmespeicher hauptsächlich aus Wachs besteht.

8. Behälter nach einem der vorhergehenden Ansprüche, wobei der zweite Latentwärmespeicher die Phase bei einer höheren Temperatur als der erste Latentwärmespeicher wechselt und die zweite Latentwärmespeicher-Einheit (41; 43) näher an der Nutzlast positioniert ist als die erste Latentwärmespeicher-Einheit (39).

9. Behälter nach einem der vorhergehenden Ansprüche, wobei der Satz Latentwärmespeicher-Einheiten (39) mehrere erste Latentwärmespeicher-Einheiten (39) und mehrere zweite Latentwärmespeicher-Einheiten (41; 43) aufweist und die Konstruktion so angeordnet ist, dass das Nutzvolumen im Wesentlichen von den mehreren zweiten Latentwärmespeicher-Einheiten (41; 43) definiert wird, und die mehreren ersten Latentwärmespeicher-Einheiten (39) auf oder an den zweiten Latentwärmespeicher-Einheiten (41; 43) montiert sind, so dass sie sich außerhalb des Nutzvolumens befinden.

10. Behälter nach einem der vorhergehenden Ansprüche, wobei das Latentwärmespeichermaterial bei einer Temperatur in einem der folgenden Bereiche von einem festen Zustand in einen flüssigen Zustand übergeht: +2°C bis +8°C, -25°C bis -15°C, +15°C bis +25°C.

11. Behälter nach einem der vorhergehenden Ansprüche, wobei wenigstens eine der Latentwärmespeicher-Einheiten (39, 41, 43) ein Hebegebilde aufweist, das ein durchgehendes Loch (65) umfasst.

12. Behälter nach einem der vorhergehenden Ansprüche, der Mittel zum Verhindern des Auseinanderfallens der hohlen Struktur nach außen aufweist, wobei der Satz Latentwärmespeicher-Einheiten so aufgebaut und angeordnet ist, dass zwischen der hohlen Konstruktion und der Wärmedämmung (34) Formschluss besteht.

13. Verfahren zum Transportieren von temperaturempfindlichen Gütern, das Folgendes beinhaltet:
Bereitstellen eines wiederverwendbaren Behälters (20) mit einem im Wesentlichen starren Körper (30), einem wärmeisolierten (34) Aufnahmevolumen (36) und Mitteln für den Zugang (22) zum wärmeisolierten (34) Aufnahmevolumen (36),
Bereitstellen eines Satzes Latentwärmespeicher-Einheiten (37), wobei jede der Latentwärmespeicher-Einheiten (39; 41; 43) einen dicht verschließbaren, im Wesentlichen starren Behälter zum Lagern von Latentwärmespeichern in ihm aufweist und wenigstens einige der Latentwärmespeicher-Einheiten (37) Stützgebilde aufweisen,
Einsetzen des Satzes von Latentwärmespeicher-Einheiten (37) in das wärmeisolierte Aufnahmevolumen (36), Bilden einer hohlen Konstruktion aus dem Satz Latentwärmespeicher-Einheiten (37), die ein im Wesentlichen eingeschlossenes Nutzvolumen zur Aufnahme der temperaturempfindlichen Güter bereitstellt, einschließlich Anordnen der Latentwärmespeicher-Einheiten (39; 41; 43), so dass die Stützgebilde (47) mit einer angrenzenden Latentwärmespeicher-Einheit in Eingriff kommen, wobei die Eingriffswechselwirkung zwischen dem Stützgebilde und der angrenzenden Latentwärmespeicher-Einheit (39; 41; 43) dadurch verhindert, dass die hohle Konstruktion während des Transports nach innen zusammenfällt, **dadurch gekennzeichnet, dass** der Satz Latentwärmespeicher-Einheiten (37) eine erste Latentwärmespeicher-Einheit (39) mit einem ersten Latentwärmespeicher, der zum Phasenwechsel bei einer ersten Temperatur angeordnet ist, und eine zweite Latentwärmespeicher-Einheit (41; 43) mit einem zweiten Latentwärmespeicher, der zum Phasenwechsel bei einer zweiten Temperatur angeordnet ist, aufweist, wobei die erste und die zweite Temperatur verschieden sind, und durch die Verwendung eines Außentemperatursensors (52) zum Messen der Umgebungstemperatur außerhalb des Behälters, eines Innentemperatursensors zum Messen der Temperatur im Nutzvolumen und die Verwendung einer Aufzeichnungsvorrichtung (56) zum Aufzeichnen der Temperatur im Nutzvolumen und/oder der Umgebungstemperatur.

14. Verfahren nach Anspruch 13, das das Bilden der hohlen Konstruktion aufweist, so dass sie eine Basis, wenigstens eine Seitenwand und wenigstens ein oberes Element aufweist und die vorzugsweise die Stützgebilde (47) an der Basis zum Einschränken von relativen Bewegungen zwischen der Basis und der oder jeder Seitenwand aufweist, wobei die Stützgebilde (47) am oberen Element relative Bewegungen zwischen dem oberen Element und der oder jeden Seitenwand einschränken, und/oder Bereitstellen wenigstens einer Seitenwand mit wenigstens einem Stützgebilde (47), wobei das Stützgebilde (47) mit einer angrenzenden Seitenwand in Wechselwirkung steht, wodurch relative Bewegungen zwischen der Seitenwand mit dem Stützgebilde (47) und der angrenzenden Seitenwand eingeschränkt werden.

15. Verfahren nach Anspruch 13 oder 14, bei dem der erste Latentwärmespeicher die Phase bei einer Temperatur im Bereich von -20°C bis +5°C und vorzugsweise bei einer Temperatur um 0°C wechselt und der zweite Latentwärmespeicher die Phase bei einer Temperatur im Bereich +5°C bis +20°C und vorzugsweise bei einer Temperatur um +5°C wechselt.

## Revendications

1. Récipient de transport réutilisable (20) pour transporter des marchandises sensibles à la température, ledit récipient (20) incluant :
un corps substantiellement rigide (30) ayant un volume de stockage (36) thermiquement isolé (34) ;
des moyens pour accéder (22) au volume de stockage (36) thermiquement isolé (34);
un ensemble d'unités MIC (37) qui peut être inséré à l'intérieur et retiré du volume de stockage thermiquement isolé, où chacune des unités MIC (39;41;43) inclut un récipient substantiellement rigide scellable pour stocker un matériau à changement de phase dans celui-ci, ledit ensemble d'unités MIC (37) étant construit et agencé pour s'assembler afin de former une structure creuse qui fournit un volume de charge utile substantiellement confiné pour recevoir des marchandises sensibles à la température, où l'ensemble d'unités MIC (37) est agencé pour maintenir les marchandises stockées dans le volume de charge utile dans une plage de température sélectionnée lors de l'utilisation ; et où au moins certaines des unités MIC (39;41;43) incluent des formations de support (47) qui sont agencées pour interagir avec une unité MIC adjacente (39;41;43) afin d'empêcher que la structure creuse ne s'effondre vers l'intérieur durant l'utilisation, **caractérisé en ce que** l'ensemble d'unités MIC (37) inclut une première unité MIC (39) ayant un premier MIC agencé pour changer de phase à une première température et une seconde unité MIC (41;43) ayant un second MIC agencé pour changer de phase à une seconde température, où les première et seconde températures sont différentes, et par un capteur de température externe (52) pour mesurer la température ambiante à l'extérieur du récipient ; un capteur de température interne pour mesurer la température dans le volume de charge utile ; et un dispositif d'enregistrement (56) pour enregistrer la température dans le volume de charge utile et / ou la température ambiante.

2. Récipient selon la revendication 1, où au moins l'une des formations de support (47) est formée d'un seul tenant avec l'une des unités MIC (39;41;43) ; et de préférence les formations de support incluent au moins l'un parmi une saillie, arête, côte, surface étagée, un renfoncement ; et / ou au moins une des unités MIC (39;41;43) dans l'ensemble inclut une formation complémentaire (59) à la formation de support (47) qui est agencée pour venir en prise avec la formation de support (47) ; et de préférence au moins une des unités MIC (39;41;43) dans l'ensemble (37) inclut des formations de support (47) et des formations complémentaires (59).

3. Récipient selon la revendication 1 ou 2, où au moins certaines des unités MIC (39;41;43) dans l'ensemble (37) incluent des formations de positionnement (49) sur une surface (45) et des renfoncements de positionnement complémentaires (59) sur une surface opposée (57) ; et / ou les unités MIC (39;41;43) sont agencées pour s'emboîter.

4. Récipient selon une quelconque des revendications précédentes, où la structure creuse inclut une base, au moins une paroi latérale, et au moins un élément supérieur ; et, de préférence, la base inclut des formations de support (47) qui sont agencées pour limiter le mouvement relatif entre la base et chacune des parois latérales ; l'élément supérieur inclut des formations de support (47) pour limiter le mouvement relatif entre l'élément supérieur et chacune des parois latérales ; et / ou au moins une des parois latérales inclut au moins une formation de support (47) agencée pour limiter le mouvement relatif entre la paroi latérale incluant la formation de support (47) et au moins une autre paroi latérale adjacente.

5. Récipient selon une quelconque des revendications précédentes, où les unités MIC (39;41;43) sont agencées en couches.

6. Récipient selon une quelconque des revendications précédentes, où le premier MIC change de phase à une température de l'ordre de -20 °C à +5 °C, et de préférence à une température d'environ 0 °C, et le second MIC change de phase à une température de l'ordre de +5 °C à +20 °C et de préférence à une température d'environ +5 °C.

7. Récipient selon la revendication 6, où le premier MIC est constitué principalement d'eau et le second MIC est constitué principalement d'une cire.

8. Récipient selon une quelconque des revendications précédentes, où le second MIC change de phase à une température plus élevée que le premier MIC, et la seconde unité MIC (41;43) est positionnée plus près de la charge utile que la première unité MIC (39).

9. Récipient selon une quelconque des revendications précédentes, où l'ensemble d'unités MIC (39) inclut une pluralité de premières unités MIC (39) et une pluralité de secondes unités MIC (41;43) et la structure est agencée de telle sorte que le volume de charge utile est substantiellement défini par la pluralité de secondes unités MIC (41;43), et la pluralité de premières unités MIC (39) est fixée sur ou aux secondes unités MIC (41;43) de telle sorte qu'elles se situent à l'extérieur du volume de charge utile.

10. Récipient selon une quelconque des revendications précédentes, où le matériau à changement de phase passe d'un état solide à un état liquide à une température dans l'une des plages suivantes : +2 °C à +8 °C ; -25 °C à -15 °C ; +15 °C à +25 °C.

11. Récipient selon une quelconque des revendications précédentes, où au moins une des unités MIC (39,41,43) inclut une formation de levage comprenant un orifice passant (65).

12. Récipient selon une quelconque des revendications précédentes, incluant des moyens pour empêcher que la structure creuse ne s'effondre vers l'extérieur, où l'ensemble d'unités MIC est construit et agencé de telle sorte qu'il existe un ajustement serré entre la structure creuse et l'isolation thermique (34).

13. Procédé pour transporter des marchandises sensibles à la température, consistant à :
fournir un récipient réutilisable (20) ayant un corps substantiellement rigide (30), un volume de stockage (36) thermiquement isolé (34), et des moyens pour accéder (22) au volume de stockage (36) thermiquement isolé (34) ;
fournir un ensemble d'unités MIC 37, où chacune des unités MIC (39;41;43) inclut un récipient substantiellement rigide scellable pour stocker un matériau à changement de phase dans celui-ci et au moins certaines des unités MIC (37) incluent des formations de support ;
placer l'ensemble d'unités MIC (37) dans le volume de stockage thermiquement isolé (36), former une structure creuse à partir de l'ensemble d'unités MIC (37) qui fournit un volume de charge utile substantiellement confiné pour recevoir des marchandises sensibles à la température, y compris agencer les unités MIC (39;41;43) de telle sorte que les formations de support (47) viennent en prise avec une unité MIC adjacente, l'interaction par mise en prise entre la formation de support et l'unité MIC adjacente (39;41;43) empêchant ainsi que la structure creuse ne s'effondre vers l'intérieur durant le transport, **caractérisé en ce que** l'ensemble d'unités MIC (37) inclut une première unité MIC (39) ayant un premier MIC agencé pour changer de phase à une première température et une seconde unité MIC (41;43) ayant un second MIC agencé pour changer de phase à une seconde température, où les première et seconde températures sont différentes, et par l'utilisation d'un capteur de température externe (52) pour mesurer la température ambiante à l'extérieur du récipient ; un capteur de température interne pour mesurer la température dans le volume de charge utile ; et l'utilisation d'un dispositif d'enregistrement (56) pour enregistrer la température dans le volume de charge utile et / ou la température ambiante.

14. Procédé selon la revendication 13, incluant la formation de la structure creuse afin d'inclure une base, au moins une paroi latérale, et au moins un élément supérieur, et incluant de préférence les formations de support (47) sur la base pour limiter le mouvement relatif entre la base et la ou chaque paroi latérale ; les formations de support (47) sur l'élément supérieur limitant le déplacement relatif entre l'élément supérieur et la ou chaque paroi latérale ; et / ou la fourniture d'au moins une paroi latérale ayant au moins une formation de support (47), la formation de support (47) interagissant avec une paroi latérale adjacente limitant ainsi le mouvement relatif entre la paroi latérale incluant la formation de support (47) et la paroi latérale adjacente.

15. Procédé selon la revendication 13 ou 14, incluant le premier MIC changeant de phase à une température de l'ordre de -20 °C à +5 °C, et de préférence à une température d'environ 0 °C, et le second MIC changeant de phase à une température de l'ordre de +5 °C à +20 °C et de préférence à une température d'environ +5 °C.
